**Europäisches Patentamt**

**European Patent Office**

**Office européen des brevets**

(19)

(11) Veröffentlichungsnummer : **0 299 956 B1**

(12)

# EUROPÄISCHE PATENTSCHRIFT

(45) Veröffentlichungstag der Patentschrift :
06.11.91 Patentblatt 91/45

(51) Int. Cl.⁵ : **H02P 6/02**

(21) Anmeldenummer : 87901390.2

(22) Anmeldetag : 12.03.87

(86) Internationale Anmeldenummer :
PCT/DE87/00109

(87) Internationale Veröffentlichungsnummer :
WO 87/05756 24.09.87 Gazette 87/21

(54) **SCHALTUNGSANORDNUNG ZUM BETREIBEN EINES MEHRPHASIGEN SYNCHRONMOTORS AN EINEM GLEICHSPANNUNGSNETZ.**

(30) Priorität : 22.03.86 DE 3609826

(43) Veröffentlichungstag der Anmeldung :
25.01.89 Patentblatt 89/04

(45) Bekanntmachung des Hinweises auf die
Patenterteilung :
06.11.91 Patentblatt 91/45

(84) Benannte Vertragsstaaten :
DE FR GB IT NL SE

(56) Entgegenhaltungen :
DE-A- 2 156 389
US-A- 4 162 435
US-A- 4 262 237
US-A- 4 431 953
US-A- 4 446 406

(73) Patentinhaber : ROBERT BOSCH GMBH
Postfach 50
W-7000 Stuttgart 1 (DE)

(72) Erfinder : HARMS, Klaus
Lärchenweg 36
W-7143 Vaihingen/Enz (DE)
Erfinder : SCHRAY, Hans-Dieter
Enzstrasse 12
W-7145 Markgröningen (DE)
Erfinder : TAUBITZ, Bernd
Hermann-Essig-Strasse 106
W-7141 Schwieberdingen (DE)
Erfinder : WIRTZ, Rainer
Talstrasse 21
W-7145 Markgröningen-Unterriexingen (DE)

EP 0 299 956 B1

## Beschreibung

### Stand der Technik

Die Erfindung geht aus von einer Schaltungsanordnung zum Betreiben eines mehrphasigen Synchronmotors an einem Gleichspannungsnetz der im Oberbegriff des Anspruchs 1 angegebenen Gattung.

Bei einer bekannten Schaltungsanordnung dieser Art (DE-OS 30 42 819) werden von der Ringzähler-Schaltvorrichtung die in den nicht zugeschalteten Phasen der Ankerwicklung induzierten Wechselspannungen gemessen und die Fortschaltung des Ringzählers und damit die Zuschaltung einer Phase der Ankerwicklung durch Ansteuerung des entsprechenden Stromventils etwa symmetrisch zum Scheitelpunkt der negativen Halbwelle der induzierten Wechselspannung vorgenommen Die Zeitpunkte für die Fortschaltung des Ringzählers und damit für die Zu- bzw. Abschaltung der einzelnen Wicklungsphasen der Ankerwicklung wird durch Vergleich der in den nicht zugeschalteten Wicklungsphasen induzierten Spannungen bestimmt. Hierzu weist bei einem Synchronmotor mit einer n-phasigen Ankerwicklung, wobei n geradzahlig ist, die Ringzähler-Schaltvorrichtung ein flankengetriggertes Monofloop, das auf ein Triggersignal an seinem Eingang einen Zählimpuls für den Ringzähler erzeugt, und eine Vergleichsschaltung auf, die immer dann einer Triggersignal für das Monoflop generiert, wenn die Spannung an derjenigen gesperrten Ankerwicklung, die zu der stromdurchflossenen Ankerwicklung um eine halbe elektrische Periode versetzt ist, die Spannung an der dieser Ankerwicklung unmittelbar nacheilenden bzw. zyklisch nachfolgenden Ankerwicklung übersteigt. Durch das Weiterschalten des Ringzählers wird damit das momentan geöffnete Stromventil wieder gesperrt und ein nächstes Stromventil geöffnet, wodurch jeweils eine Phase der Ankerwicklung abgeschaltet und die nächstfolgende Phase zugeschaltet wird. Wie erwähnt, erfolgt dabei die Zuschaltung der jeweiligen Wicklungsphase etwa symmetrisch zum Scheitelpunkt der negativen Halbwelle der in der jeweiligen Wicklungsphase induzierten Wechselspannung, so daß bei einem z.B. vierphasigen Synchronmotor mit den vier an den gesperrten Stromventilen abfallenden Spannungen $U_1$, $U_2$, $U_3$ und $U_4$ das erste Stromventil solange öffnet, solange $U_3$ größer als $U_2$ und größer als $U_4$ ist, das zweite Stromventil leitend ist, solange $U_4$ größer als $U_3$ und größer als $U_1$ ist, das dritte Stromventil leitend ist, solange $U_1$ größer als $U_4$ und größer als $U_2$ ist, und schließlich das vierte Stromventil solange öffnet, solange $U_2$ größer als $U_1$ und größer als $U_3$ ist. Die Zuschaltbedingungen der Stromventile, also $U_1$ größer als $U_4$ bzw. $U_2$ größer als $U_1$ bzw. $U_3$ größer als $U_2$ bzw. $U_4$ größer als $U_3$, für jeweils eines der vier Stromventile ist dabei über einen elektrischen Winkel von 180° vorhanden, was bedeutet, daß die Umschaltbedingung nach jeweils 90° Vorwärts- oder 90° Rückwärstsdrehung auftritt. Dadurch kann nach entsprechendem Anstoßen, z.B. durch ungünstige Startposition oder nach Umschaltung der Drehrichtung, der Motor auch gegen die gewünschte Drehrichtung anlaufen, zwar mit vermindertem Drehmoment, aber ohne elektrische Bremswirkung.

Da im Stillstand des Rotors oder Läufers keine Informationen über dessen Stellung vorhanden sind, ist bei der bekannten Schaltungsanordnung ein Hilfstaktgenerator vorgesehen. Durch diesen Hilfstaktgenerator wird der Ringzähler zum Anlaufen des Motors gestartet und in sehr langsamen Schritten von z.B. 0,5 sec weitergeschaltet, so daß sich der Rotor mit Sicherheit ausrichten kann. Sobald Drehrichtung, Zählerstand des Ringzählers und Spannungsschnittpunkte ($U_1 > U_4$, $U_2 > U_1$, usw.) zusammenpassen, geht der Synchronmotor in die Selbststeuerung über und beschleunigt mit max. Drehmoment bis auf die Betriebsdrehzahl. Im ungünstigsten Fall ergibt sich bei dieser Schaltungsanordnung eine Startverzögerung von mehr als 1 sec.

Für bestimmte Anwendungen des Synchronmotors, z.B. bei Verwendung als Kraftstoffpumpe für Einspritzmotoren, ist diese Startverzögerung des Motors nicht tragbar. Für einen unverzögerten Start hat man eine sog. Nachpositionierung vorgesehen, bei welcher beim Stillsetzen des Motors der Rotor in eine definierte Stellung gebracht wird, aus der heraus ein erneuter Start unverzögert erfolgen kann. Diese Nachpositionierung erfordert ein zeitverzögertes Abschalten der Versorgungsspannung und eine zusätzlichen Steuereingang für die Abschaltinformation des Motors.

### Vorteile der Erfindung

Die erfindungsgemäße Schaltungsanordnung mit den kennzeichnenden Merkmalen des Anspruchs 1 hat den Vorteil, daß der Bereich der Fortschaltung des Ringzählers auf einen wesentlich kleineren elektrischen Winkelbereich reduziert ist. Bei einer Schaltungsanordnung für einen n-phasigen Synchronmotor gemäß Anspruch 6, wobei n geradzahlig ist, ist dieser Bereich der Fortschaltung des Ringzählers auf etwas weniger als elektrisch 45° reduziert, je nachdem, wie groß k gewählt wird. Der Faktor k wird dabei empirisch bestimmt und auf das Massenträgheitsmoment des Rotors des Synchronmotors abgestimmt. Damit ist die Selbststeuerung des Motors auf diesen begrenzten Winkelbereich festgelegt. Pendelt der Rotor nach dem Einschalten in Vorwärtsrichtung, so wird - sofern die Schaltbedingungen vorhanden sind - ein Weiterschalten des Ringzählers ausgelöst, wodurch eine Beschleunigung des Rotors im richtigen Drehsinne zustande kommt. Pendelt der Rotor in Rückwärtsrichtung und die gennanten Bedingungen sind vorhanden, so wird der Ringzähler ebenfalls in Vorwärtsrichtung weitergeschaltet. Damit kommt ein Abbremsen des Läufers zustande. Insgesamt entwickelt der Synchronmotor durch die erfindungsgemäße Schaltungsanordnung in der gewünschten Laufrichtung das max. Antriebs- bzw. Drehmoment. Ein schneller Rückwärtslauf wird wirksam abgebremst.

Durch die in den weiteren Ansprüchen aufgeführten Maßnahmen sind vorteilhafte Weiterbildungen und Verbesserungen der im Anspruch 1 angegebenen Schaltungsanordnung möglich. Eine vorteilhafte Ausführungsform der Erfindung ergibt sich dabei aus Anspruch 3. Durch diesen Zählimpuls-Hilfserzeuger wird - wenn der Bereich der Selbststeuerung nicht erreicht wird, z.B. wenn aufgrund von Stillstand bzw. sehr langsamer Vorund Rückwärtsbewegung des Rotors keine nennenswerte Spannung in der Ankerwicklung induziert wird - ein Zusatz-Zählimpuls erzeugt, der den Ringzähler um einen Schritt weiterschaltet, und zwar solange, bis der Selbststeuerungsbereich erreicht ist. Die vorgegebene Wartezeit wird immer neu gestartet, wenn der Zustand des Ringzählers sich gerade geändert hat und läuft solange, als sich der Zustand des Ringzählers nicht ändert. Durch diese Maßnahmen ist ein Schnellstart des Synchronmotors aus dem Stillstand möglich, und zwar ohne das Erfordernis der Nachpositionierung des Läufers nach Abschalten des Motors. Der Synchronmotor verhält sich beim Anlauf praktisch wie ein herkömmlicher Gleichstrommotor. Die max. Anlaufverzögerung bis zum Erreichen der Selbststeuerung ist bei richtiger Dimensionierung der Konstanten k und der Wartezeit kleiner als die Hochlaufzeit des Motors.

Eine vorteilhafte Ausführungsform der Erfindung ergibt sich aus Anspruch 6 für einen Synchronmotor mit einer geradzahligen Anzahl von Wicklungsphasen in der Ankerwicklung.

Eine vorteilhafte Ausführungsform der Erfindung ergibt sich auch aus Anspruch 7. Durch diese Maßnahmen läßt sich ein Zählimpuls-Hilfserzeuger für eine Schaltungsanordnung gemäß Anspruch 6 in vorteilhafter Weise realisieren.

Vorteilhafte Ausführungsformen der Erfindung ergeben sich auch aus den Ansprüche 9 - 12. Durch diese Maßnahmen ist der Triggersignal-Hilfserzeuger gesperrt, solange sich der Rotor mit einer Mindestgeschwindigkeit in einem begrenzten Winkelbereich dreht. Das Hilfs-Triggersignal wird damit unterdrückt, denn in diesem Bereich ist ein Weiterschalten des Ringzählers für den Vorwärtslauf schädlich und bremst einen möglicherweise vorliegenden Rückwärtslauf nicht ab.

Eine vorteilhafte Ausführungsform der Erfindung ergibt sich auch aus Anspruch 13. Diese Maßnahme bewirkt, daß die beim Umschalten der Wicklungsphasen auftretenden Störspannungen nicht zu einem unbeabsichtigten Weiterschalten des Ringzählers führen, bevor die nächste definierte Umschaltbedingung erreicht ist.

Eine vorteilhafte Ausführungsform der Erfindung ergibt sich auch aus Anspruch 15. Durch die Multiplexer läßt sich der Schaltungsaufwand der Vergleichsvorrichtung auf nur wenige Komparatoren beschränken, denen sukzessive die jeweils notwendigen Vergleichsspannungen zugeführt werden.

Eine vorteilhafte Ausführungsform der Erfindung ergibt sich auch aus Anspruch 16, insbesondere in Verbindung mit Anspruch 17. Mittels dieser Schaltvorrichtung ist eine Drehrichtungsänderung des Rotors des Synchronmotors möglich. Bei einer vierphasigen Ankerwicklung werden dabei in der Umschaltstellung der Umschalter diejenigen Eingänge der Multiplexer miteinander vertauscht, die mit den Eingängen der den geradzahligen oder den ungeradzahligen Wicklungsphasen der Ankerwicklung zugehörigen Stromventile verbunden sind. Gleichzeitig werden die Steuereingänge der entsprechenden Stromventile, die der geradzahligen oder ungeradzahligen Wicklungsphase der Ankerwicklung zugehörig sind, in ihrem Anschluß an den Ringzähler miteinander vertauscht. Die Drehrichtungsumkehr kann während des Laufens des Motors erfolgen, wobei der Rotor aktiv abgebremst wird und anschließend in umgekehrter Drehrichtung wieder weiterläuft.

Zeichnung

Die Erfindung ist anhand von in der Zeichnung dargestellten Ausführungsbeispielen in der nachfolgenden Beschreibung nährer erläutert. Es zeigen:

Fig. 1 ein Prinzipschaltbild eines vierphasigen Synchronmotors mit einer Schaltungsanordnung zum Betreiben des Synchronmotors an einem Gleichspannungsnetz,

Fig. 2 ein Diagramm des Spannungsverlaufes der an Stromventilen der Schaltungsanordnung abfallen Spannungen,

Fig. 3 ein Blockschaltbild eines Steuerblocks zur Ansteuerung der Stromventile in der Schaltungsanordnung in Fig. 1,

Fig. 4 ausschnittweise ein Blockschaltbild einer Ringzähler-Schaltvorrichtung im Steuerblock in Fig. 1 gemäß einem weiteren Ausführungsbeispiel.

Beschreibung der Ausführungsbeispiele

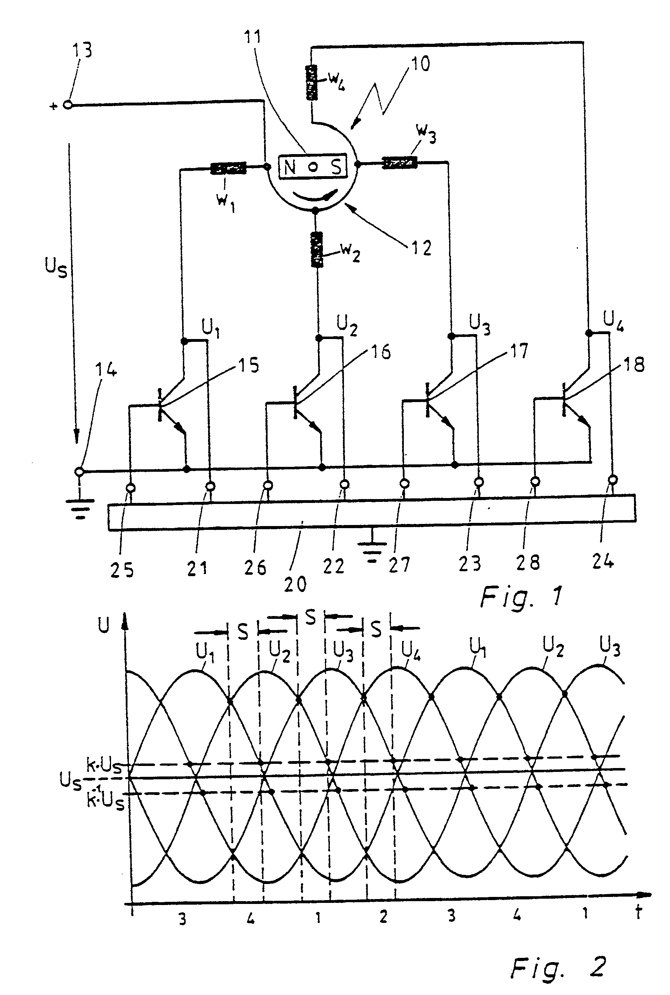

In dem in Fig. 1 dargestellten Prinzipschaltbild ist der Synchronmotor mit 10 bezeichnet. Er weist einen zweipoligen, mit Permanentmagneten bestücken Rotor 11 auf, der in Pfeilrichtung in einem Ständer rotiert, in welchem eine vierphasige Ankerwicklung 12, bestehend aus den Wicklungssträngen oder Wicklungsphasen $w_1$ - $w_4$, untergebracht ist. Die Wicklungsstränge $w_1$ -$w_4$ sind mit einem Wicklungsende an dem Pluspotential 13 einer Netzgleichspannung $U_S$ angeschlossen. In Reihe mit den Wicklungssträngen $w_1$ - $w_4$ ist jeweils ein hier als Leitungstransistor 15 - 18 ausgebildetes Stromventil geschaltet, wobei die Emitter der hier von npn-Transistoren gebildeten Leistungstransistoren 15 - 18 an dem Null- oder Minuspotential 14 der Netzgleichspannung $U_S$ liegen. Damit sind die Reihenschaltungen aus jeweils einem Wicklungsstrang $w_1$ - $w_4$ und einem Leistungstransistor 15 - 18 an der Netzgleichspannung $U_S$ angeschlossen. Zum Steuern der Leistungstransistoren 15 - 18 ist ein Steuerblock 20 vorgesehen, der vier mit den Kollektoren der Leistungstransistoren 15 - 18 verbundene Eingänge 21 - 24 und vier mit den Basen der Leistungstransistoren 15 - 18 verbundene Ausgänge 25 - 28 aufweist. An den Eingängen 21 - 24 liegen die über die Leistungstransistoren 15 - 18 abfallenden Spannungen $U_1$ - $U_4$ an. Der zeitliche Verlauf dieser Spannungen $U_1$ - $U_4$ bei gesperrten Leistungstransistoren 15 - 18 ist in Fig. 2 dargestellt. Er stellt die Summe aus der jeweils in den Wincklungssträngen $w_1$ - $w_4$ induzierten Ankerspannungen und der Netzgleichspannung $U_S$ dar.

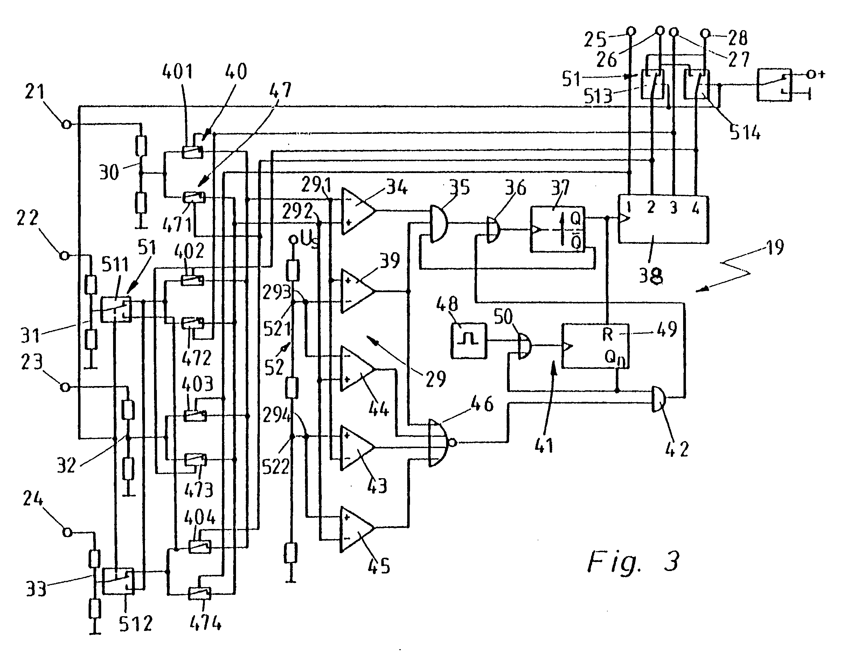

Der Steuerblock 20 ist in Fig. 3 im Blockschaltbild dargestellt. Mit den Eingängen 21 - 24 des Steuerblocks 20 ist jeweils ein Spannungsteiler 30 - 33 verbunden. Die Teilerabgriffe der Spannungsteiler 30 - 33 sind mit jeweils einem Eingang von zwei Multiplexern 40, 47 verbunden. Der erste Multiplexer 40 wird von den Einzelschaltern 401, 402, 403 und 404, der zweite Multiplexer 47 von den Einzelschaltern 471, 472, 473 und 474 gebildet. Zwischen dem Teilerabgriff der Spannungsteiler 31 und 33 und den Eingängen der zugeordneten Einzelschalter 402, 472 bzw. 404, 474 ist jeweils ein zu einer Drehrichtungsumkehr-Schaltvorrichtung 51 gehörender Umschalter 511 bzw. 515 eingeschaltet. In der gezeichneten Schaltstellung stellen die Umschalter 511 und 512 die beschriebenen Verbindungen zwischen Teilerabgriffen und den Einzelschaltern 402 und 472 bzw. 404 und 474 her. in ihrer Umschaltstellung werden die Anschlüsse der Einzelschalter 402, 472, 404, 474 gegeneinander vertauscht, so daß nunmehr der Teilerabgriff des Spannungsteilers 31 mit den Eingängen der Einzelschalter 404, 474 und der Teilerabgriff des Spannungsteilers 33 mit den Eingängen der Einzelschalter 402 und 472 verbunden ist. Zu der Drehrichtungsumkehr-Schaltvorrichtung 51 gehören noch zwei weitere Umschalter 513 und 514, deren Einbindung in das Schaltbild des Steuerblocks 20 noch beschrieben wird.

Die Spannungsteiler 30, 33 und Multiplexer 40, 47 sind Teil einer Ringzähler-Schaltvorrichtung 19, die weiterhin eine Vergleichsvorrichtung 29 mit vier Vergleichseingängen 291 - 294, ein flankengetriggertes Monoflop 37, das über ein als AND-Gatter 35 ausgebildetes erstes Torglied mit der Vergleichsvorrichtung 29 verbunden ist, und einen Ringzähler 38 aufweist, dessen Zähleingang mit dem instabilen Q-Ausgang des Monoflops 37 verbunden ist. Der erste Vergleichseingang 291 der Vergleichsvorrichtung 29 ist mit dem Ausgang des Multiplexers 40, der zweite Vergleichseingang 292 mit dem Ausgang des Multiplexers 47, der dritte Vergleichseingang 293 mit einem ersten Teilerabgriff 521 eines weiteren Spannungsteilers 52 und der vierte Vergleichseingang 294 mit einem zweiten Teilerabgriff 522 des Spannungsteilers 52 verbunden. Der Spannungsteiler 52 ist an die Netzgleichspannung $U_S$ gelegt, und die Teilerabgriffe sind so eingestellt, daß am ersten Teilerabgriff 521 eine Spannung abgegriffen wird, die dem $k/s$-fachen Wert der Netzgleichspannung $U_S$ entspricht, und am zweiten Teilerabgriff 522 eine Spannung abgegriffen wird, die gleich dem $1/k \cdot s$-fachen der Netzgleichspannung $U_S$ entspricht.

Der Ringzähler 38 mit einem 1 aus 4-Code weist vier parallele Zählausgänge 1 - 4 auf, die einerseits mit den Ausgängen 25 - 28 des Steuerblocks 20 und andererseits mit den Steuereingängen der Multiplexer 40 und 47 bzw. mit den Steuereingängen der Einzelschalter 401 - 404 bzw. 471 - 474 der Multiplexer 40 und 47 verbunden sind. In den von den Zählausgängen 2 und 4 zu den Ausgängen 26 und 28 führenden Leitungen ist jeweils ein Umschalter 513 bzw. 514 der Drehrichtungsumkehr-Schaltvorrichtung 51 angeordnet. In der gezeichneten Schaltstellung verbinden die Umschalter 513 und 514 den Zählausgang 2 mit dem Ausgang 26 und den Zählausgang 4 mit dem Ausgang 28. In ihrer Umschaltstellung vertauschen die beiden Umschalter 513 und 514 die an die Ausgänge 26 und 28 führenden Zählausgänge 2 und 4 miteinander, so daß nunmehr der Zählausgang 4 mit dem Ausgang 26 und der Zählausgang 2 mit dem Ausgang 28 verbunden ist. Alle Umschalter 511 - 514 werden mittels eines Steuerschalters 53 synchron geschaltet.

Die Teilerabgriffe der Spannungsteiler 30 - 33 sind jeweils so eingestellt, daß an den Teilerabgriffen das $1/s$-fache der an den jeweiligen Stromventilen 15 - 18 abfallenden Spannungen $U_1$-$U_4$ abgegriffen und den Multiplexern 40 und 47 zugeführt wird. Die beiden Multiplexer 40, 47 sind synchron derart gesteuert, daß die an dem gleichen Spannungsteiler 30 - 33 angeschlossenen Eingänge der beiden Multiplexer 40, 47 in der Schaltfolge gegeneinander um einen Eingang verschoben sind, so daß an den Ausgängen der beiden Multiplexer 40, 47 jeweils Spannungen anstehen, die im Falle einer vierphasigen Ankerwicklung um 90° elektrisch gegeneinander verschoben sind. Die Multiplexer 40, 47 werden dadurch von dem Ringzähler 38 derart gesteuert, daß an dem Ausgang des ersten Multiplexers 40 und damit an dem ersten Vergleichseingang 291 der Vergleichsschaltung 29 jeweils das $1/s$-fache derjenigen Spannung anliegt, die in einer um eine halbe elektrische Periode zu der momentan stromführenden Wicklungsphase der Ankerwicklung 12 versetzt liegenden Wicklungsphase induziert wird, und daß an dem Ausgang des zweiten Multiplexers 47 und damit an dem zweiten Vergleichseingang 292 der Vergleichsvorrichtung 29 jeweils das 1/s-fache derjenigen Spannung liegt, die der an dem ersten Vergleichseingang 291 liegenden Spannung unmittelbar, d.h. um einen der Phasenzahl der Ankerwicklung entsprechenden Teil der elektrischen Periode, hier 90°, nacheilt. Ist beispielsweise die Wicklungsphase $w_1$ stromführend, was voraussetzt, daß der Zählerstand des Ringzählers 38 "1" ist und am Zählausgang 1 ein Steuersignal für den Leistungstransistor 15 anliegt, so sind die Einzelschalter 403 und 474 der Multiplexer 40, 47 angesteuert und am ersten Vergleichseingang 291 der Vergleichsvorrichtung 29 liegt da 1/s-fache der an dem Stromventil 17 abfallenden. Spannung $U_3$ und an dem zweiten Vergleichseingang 292 das 1/s-fache der an dem mit der nacheilenden Phase $w_4$ verbundenen Stromventil 18 abfallenden Spannung $U_4$. Ist die Wicklungsphase $w_2$ stromführend, so liegt an den ersten Vergleichseingang 291 das 1/s-fache der Spannung $U_4$ und an dem zweiten Vergleichseingang 292 das 1/s-fache der Spannung $U_1$ und so fort.

Die Vergleichsschaltung 29 weist einen ersten Komparator 34 auf, dessen invertierender Eingang mit dem ersten Vergleichseingang 291 und dessen nicht invertierender Eingang mit dem zweiten Vergleichseingang 292 verbunden ist. Der Ausgang des Komparators 34 ist mit einem Eingang des AND-Gatters 35 verbunden. Die Vergleichsvorrichtung 29 weist einen zweiten Komparator 39 auf, dessen nicht invertierender Eingang mit dem ersten Vergleichseingang 291 der Vergleichsvorrichtung 29 und dessen invertierender Eingang mit dem dritten Vergleichseingang 293 der Vergleichsvorrichtung 29 verbunden ist. Der Ausgang des Komparators 39 ist mit dem zweiten Eingang des AND-Gatters 35 verbunden. Der erste Komparator 34 gibt ein logisch "1"-Signal aus, solange die Spannung am zweiten Vergleichseingang 292 größer ist als die am ersten Vergleichseingang 291. Der Komparator 39 gibt ein logisch "1"-Signal aus, wenn die Spannung am ersten Vergleichseingang 291 größer ist als die Spannung am dritten Vergleichseingang 293. Diese Spannung am dritten Vergleichseingang 293 entspricht dem k/s-fachen der Netzgleichspannung $U_S$, wobei die Konstante k größer als 1, vorzugsweise zwischen 1,05 und 1,1 gewählt ist. Der Faktor s ist größer oder gleich der Konstanten k bemessen. Sobald die beiden Komparatoren ein logisch 1-Signal abgeben, gelangt über das AND-Gatter 35 ein Triggersignal an den Eingang des Monoflops 37, und zwar über ein zwischen dem AND-Gatter 35 und dem Triggereingang des Monoflops 37 eingeschaltetes OR-Gatter 36. Die positive Flanke des Triggersignals überführt das Monoflop 37 in seinen instabilen Zustand, in welchem der Q-Ausgang des Monoflops 37 logisch 1 annimmt. Die positive Flanke des logisch 1-Signals am Q-Ausgang des Monoflops 37 bildet einen Zählimpuls, der über den Zähleingang den Ringzähler 38 weiterschaltet. Außerdem ist der $\overline{Q}$-Ausgang des Monoflops 37 auf einen dritten Eingang des AND-Gatters 35 rückgeführt. Damit wird bewirkt, daß während einer Ausblendzeit, die der Standzeit oder Verweilzeit des Monoflops 37 in seinem instabilen Zustand entspricht, die beim Umschalten der Wicklungsstränge oder Wicklungsphasen $w_1$ - $w_4$ auftretenden Störspannungen nicht zu einem unbeabsichtigten Weiterschalten des Ringzählers 38 führen, bevor die nächste definierte Umschaltbedingung erreicht ist.

Die Umschaltbedingungen für die Selbststeuerung des Motors ist in Fig. 2 anschaulich dargestellt. Ist z.B. das Stromventil 18 leitend, und damit der Wicklungsstrang $w_4$ der Ankerwicklung 12 stromführend, und übersteigt die Spannung $U_3$ am Ausgang des Multiplexers 47 und damit am zweiten Vergleichseingang 292 der Vergleichsvorrichtung 29 die Spannung $U_2$ am Ausgang des Multiplexers 40, und damit am ersten Vergleichseingang 291, und liegt die Bedingung vor, daß die Spannung $U_2$ am ersten Vergleichseingang 291 größer ist als die Spannung am dritten Vergleichseingang 293, also größer als das k/s-fache der Netzgleichspannung $U_S$, so ändert sich die Wertigkeit des Triggereingangs des Monoflops 37 von logisch 0 auf logisch 1. Damit geht das Monoflop 37 für die Standzeit in seinen instabilen Zustand, über und der Q-Ausgang des Monflops 37 ändert seine Wertigkeit von logisch 0 auf logisch 1. Der Zähler 38 wird fortgeschaltet und nimmt seinen Zählzustand "1" ein, in welchem an dem Ausgang 25 eine positive Steuerspannung auftritt. Diese Steuerspannung liegt an der Basis des Leistungstransistors 15, so daß diese durchsteuert und sein Strom von dem Pluspotential 13 über den Wicklungsstrang $w_1$ zu dem Nullpotential 14 fließt. Die am Leistungstransistor 15 abfallenden Spannung ist nahe Null, und zwar für einen elektrischen Winkelbereich von etwa 90° im Falle der vierphasigen Ankerwicklung (Bei einer geradzahligen n-phasigen Ankerwicklung wäre dieser Winkelbereich gleich dem der Phasenzahl entsprechenden Bruchteil von 360° elektrisch). Der Bereich, in dem die vorstehend beschriebenden Schaltbedingungen für die Ringzähler-Schaltvorrichtung 19 gegeben ist, ist in Fig. 2 mit S gekennzeichnet.

Gleichzeitig mir der Änderung des Zählstandes des Ringzählers von "4" auf "1" werden die Multiplexer 40, 47 umgeschaltet. Nunmehr liegt an dem ersten Vergleichseingang 291 der Vergleichsvorrichtung 29 der 1/s-fache Wert der Spannung $U_3$ und an dem zweiten Vergleichseingang 292 das 1/s-fache der Spannung $U_4$. Der vorstehend beschriebene Vorgang wiederholt sich, sobald die Spannung am Vergleichseingang 292 die Spannung am Vergleichseingang 291 übersteigt und die Spannung am ersten Vergleichseingang 291 größer ist als die Spannung am dritten Vergleichseingang 292. Der Ringzähler 38 wird um einen weiteren Schritt weitergezählt, und am Ausgang 26 des Steuerblockes 20 steht nunmehr ein positives Steuerpotential an. Der Leistungstransistor 16 wird leitend, und die Spannung $U_2$ am Leistungstransistor 16 sinkt bis nahe Null ab. Dieser Vorgang wiederholt sich in zyklischer Reihenfolge. In den in Fig. 2 mit S gekennzeichneten Bereichen ist die Schaltbedingung für die Selbststeuerung des Motors gegeben. Sie ist beschränkt auf einen Bereich von kleiner 45° elektrisch.

Für den Fall, daß die Weiterschaltbedingung in dem Selbststeuerbereich S des Motors nicht zustande kommt, d.h. daß aufgrund von Stillstand des Rotors 11 bzw. sehr langsamer Vor- oder Rückwärtsbewegung des Rotors 11 keine nennswerte Spannung induziert wird, ist ein Zählimpuls-Hilfserzeuger vorgesehen, der einen Zusatz-Zählimpuls generiert, wenn innerhalb einer vorgegebenen Wartezeit kein Zählimpuls auftritt und beide an den beiden Vergleichseingängen 291 und 292 anliegenden Spannungen zwischen den Daten $\frac{k}{s}$ und $\frac{1}{ks}$ liegen. Der Zählimpuls-Hilfserzeuger besteht aus dem Monoflop 37, dem OR-Gatter 36 und einen Triggersignal-Hilfserzeuger 41. Der Triggersignal-Hilfserzeuger 41 generiert nach Ablauf einer vorgegebenen Wartezeit nach Auftreten eines Zählimpulses ein Triggersignal, das über das OR-Gatter 36 an den Triggereingang des Monoflops 37 gelangt. Die Wartezeit ist dabei größer bemessen, als die Folgezeit zweier aufeinanderfolgender Zählimpulse bei rotierenden Motor 11. Zwischen dem Triggersignal-Hilferzeuger 41 und dem OR-Gatter 36 ist ein als AND-Gatter 42 ausgebildetes zweites Torglied angeordnet, das von der Vergleichsvorrichtung 29 gesteuert ist.

Die Vergleichsvorrichtung 29 weist einen dritten Komparator 43 auf, dessen nicht invertierender Eingang mit dem vierten Vergleichseingang 294 der Vergleichsvorrichtung 29 verbunden ist, an dem das 1/k·s-fache der Netzgleichspannung $U_S$ anliegt, wobei wiederum k größer 1, vorzugsweise zwischen 1,05 und 1,1, und s größer oder gleich k bemessen ist. Der invertierende Eingang des Komparators 43 liegt an dem 1. Vergleichseingang 291. Der Komparator 43 legt solange ein Sperrsignal an das zweite Torglied 42, solange die Spannung am ersten Vergleichseingang 291 kleiner als die Spannung am vierten Vergleichseingang 294 ist. Die Vergleichsvorrichtung 29 weist weiterhin einen vierten Komparator 44 auf, dessen nicht invertierender Eingang mit dem zweiten Vergleichseingang 292 und dessen invertierender Eingang mit dem dritten Vergleichseingang 293 der Vergleichsvorrichtung 29 verbunden ist. Der vierte Komparator 44 vergleich die Spannungen an diesen beiden Vergleichseingängen und gibt solange ein Sperrsignal an das zweite Torglied 42, solange die Spannung am zweiten Vergleichseingang 292 größer ist als die am dritten Vergliechseingang 293. Schließlich weist die Vergleichsvorrichtung 29 noch einen fünften Komparator 45 auf, dessen invertierender Eingang mit dem zweiten Vergliechseingang 292 und dessen nicht invertierender Eingang mit dem vierten Vergleichseingang 294 der Vergleichsvorrichtung 29 verbunden ist. Der fünfte Komparator 45 vergleicht die beiden Spannungen und gibt ein Sperrsignal an das zweite Torglied 42, solange die Spannung am zweiten Vergleichseingang 292 größer ist als die am vierten Vergleichseingang 294. Schließlich legt auch der zweite Komparator 39 ein Sperrsignal an das zweite Torglied 42, solange die Spannung am ersten Vergleichseingang 291 die am zweiten Vergleichseingang 292 übersteigt. Im einzelnen ist hierzu ein NOR-Gatter 46 mit vier Eingängen vorgesehen, dessen Ausgang mit dem einen Eingang des als AND-Gatter 42 ausgebildeten zweiten Torgliedes verbunden ist. Jeder der Eingänge des NOR-Gatters 46 ist mit einem der Ausgänge der Komparatoren 39, 43, 44 und 45 verbunden.

Durch diese Komparatoren 39, 43 - 45 der Vergleichsvorrichtung 29 kann ein Triggersignal von dem Triggersignal-Hilfserzeuger 41 zu dem Monoflop 37 nur dann gelangen, wenn die Sperrsignale der Vergleichsvorrichtung 29 wegfallen. Dieser Bereich, in welchem das AND-Gatter 42 durch Wegfall der Sperrsignale (logisch 1-Signal am Ausgang des NOR-Gatters 46) gesetzt ist, ist in Fig. 2 strichliniert eingezeichnet und durch die Grenzen $k \cdot U_S$ und $k^{-1} \cdot U_S$ festgelegt. Damit ist die Freigabe des Hilfs-Triggersignals von der Drehbewegung des Rotors 11 abhängig. Erst wenn die vom Rotor induzierten Spannungen unter einem Mindestwert liegen, und damit die an den Wicklungsphasen $w_1$-$w_4$ bzw. Stromventilen 15-19 auftretenden Spannungen $U_1$-$U_4$ in dem Bereich $k^{-1} \cdot U_S$ und $k \cdot U_S$ fallen, kann ein vom Triggersignal-Hilfserzeuger 41 generiertes Hilfs-Triggersignal an das Monoflop 37 gelangen und hier das Auslösen eines Zählimpulses für den Ringzähler 38 bewirken.

Der Triggersignal-Hilfserzeuger 41 weist einen Zählimpulsgenerator 48 und einen Zähler 49 mit Rücksetzeingang R und Zählausgang $Q_n$ auf, der einerseits über ein OR-Gatter 50 auf den Zähleingang des Zählers 49 rückgeführt ist und andererseits an dem zweiten Eingang des AND-Gatters 42 angeschlossen ist. Der Ausgang des Zählimpulsgenerators 48 ist mit dem anderen Eingang des OR-Gatters 50 verbunden. Der Rücksetzeingang R des Zählers 49 ist mit dem Q-Ausgang des Monoflops 37 verbunden, so daß der Zähler 49 mit jedem zu dem Ringzähler 38 gelangenden Zählimpuls zurückgesetzt wird. Die Zählimpulsfolgefrequenz des Zählimpulsgenerators 48 und die Zählkapazität des Zählers 49 bestimmten die Wartezeit, nach welcher ein Hilfstriggersignal in Form eines logisch 1-Signals auftritt. Die Wartezeit muß dabei größer bemessen sein als die Folgezeit zweier bei Selbststeuerung des Motors auftretender Zählimpulse.

Mit dem Hilfs-Triggersignal wird bei fehlender Selbststeuerung des Motors infolge zu geringer induzierter Ankerspannung aufgrund von Stillstand oder sehr langsamer Vor- oder Rückwärtsbewegungen des Rotors 11 das Monoflop 37 in seinen instabilen Zustand überführt und damit einerseits der Ringzähler 38 um einen Schritt weitergeschaltet und andererseits der Zähler 49 auf Null zurückgesetzt. Durch Fortschalten des Ringzählers 38 wird der Rotor 11 weitergedreht und der Motor 10 bei Zusammenpassen von Drehrichtung, Zählerstand und Schaltbedingungen für die Selbststeuerung mit max. Drehmoment bis auf die Betriebsdrehzahl beschleunigt. Infolge der gesteuerten Freigabe des Hilfs-Triggersignals durch die Vergleichsvorrichtung 29 wird ein dauerndes, langsames Drehen des Rotors 11 entgegen der gewünschten Drehrichtung verhindert, das ohne der gesteuerten Freigabe des Hilfs-Triggersignals im Takte der Wartezeit auftreten könnte.

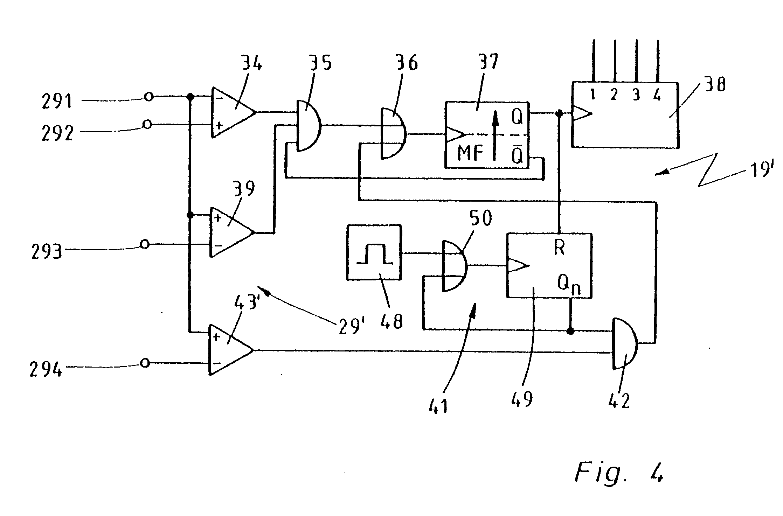

Die in Fig. 4 ausschnittweise dargestellte Ringzähler-Schaltvorrichtung 19' gemäß einem weiteren Ausführungsbeispiel stimmt weitgehend mit der in Fig. 3 dargestellten Ringzähler-Schaltvorrichtung 19 überein, so daß gleiche Bauteile mit gleichen Bezugszeichen versehen sind. Im Gegensatz zu der Ausführungsform gemäß Fig. 3 weist die Vergleichsvorrichtung 29' in der Ringzähler-Schaltvorrichtung 19' nur insgesamt drei Komparatoren auf, und zwar den ersten Komparator 34, den zweiten Komparator 39 und den dritten Komparator 43'. Das wiederum als AND-Gatter 42 ausgebildete, von der Vergleichsvorrichtung 29' gesteuerte zweite Torglied ist unmittelbar mit dem Ausgang des dritten Komparators 43' verbunden. Bei dem dritten Komparator 43' sind invertierender und nicht invertierender Ausgang vertauscht, so daß der nicht invertierende Eingang am ersten Vergleichseingang 291 und der invertierende Eingang am vierten Vergleichseingang 294 der Vergleichsvorrichtung 29' liegt. Der Komparator 43' generiert als Sperrsignal ein logisch 0-Signal, solange die Spannung am vierten Vergleichseingang 294 größer ist als die am ersten Vergleichseingang 291. Sobald die Spannung am ersten Vergleichseingang 291 jedoch die Spannung am vierten Vergleichseingang 294 übersteigt, wird das AND-Gatter 42 durch ein logisch 1-Signal gesetzt, und nach Ablauf der Wartezeit wird durch ein vom Triggersignal-Hilfserzeuger 41 generiertes Hilfs-Triggersignal das Monoflop 37 gesetzt, was wiederum einen Zählimpuls zum Weiterschalten des Ringzählers 38 auslöst. Bei dieser Ausführungsform wird das Hilfs-Triggersignal solange gesperrt, wie der Rotor 11 mit einer Mindestgeschwindigkeit in einem begrenzten Winkelbereich dreht. Dies bedeutet, daß solange wie die Spannung am ersten Vergleichseingang 291 kleiner ist als der Spannungswert $(k \cdot s)^{-1}$, $U_s$ das AND-Gatter 42 gesperrt ist, da in diesem Bereich ein Weiterschalten des Ringzählers 38 für den Vorwärtslauf schädlich ist und einen möglicherweise vorliegenden Rückwärtslauf nicht bremst.

Die Schaltungsanordnung zum Betrieben eines mehrphasigen Synchronmotors an einem Gleichspannungsnetz ist anhand eines vierphasigen Synchronmotors beschrieben. Die angegebene Schaltungsanordnung eignet sich zum Betrieben eines n-phasigen Synchronmotors, wobei n eine beliebige geradzahlige Zahl sein kann.

Das Grundprinzip dieser Schaltungsanordnung läßt sich auch zum Betreiben von n-phasigen Synchronmotoren anwenden, bei welchem n eine beliebige ungeradzahlige Zahl ist. Das Grundprinzip ist darin zu sehen, daß die Ringzähler-Schaltvorrichtung 19 in bekannter Weise aus dem Vergleich jeweils zweier an gesperrten Stromventilen abfallenden Spannungen Zählimpulse für den Ringzähler 38 generiert und daß zuzätzlich der Ringzähler-Schaltvorrichtung 19 mindestens ein von der Netzgleichspannung $U_s$ abgeleiteter Vorgabewert zugeführt wird. Die Ringzähler-Schaltvorrichtung 19 ist dabei derart ausgebildet, daß nur dann ein aus dem Spannungsvergleich abgeleiteter Zählimpuls an den Ringzähler 38 gelangen kann, solange die im zeitlichen Verlauf abnehmende Spannung der beiden zu vergleichenden Spannungen größer ist als der Vorgabewert. In gleicher Weise werden auch die Sperrsignale für die Hilfs-Triggersignale aus einem entsprechenden Vergleich der Netzgleichspannung mit den Spannungen der Ankerwicklungsphasen gewonnen.

Darüber hinaus sind weitere Modifikationen und Varianten der beschriebenen Schaltungsanordnung möglich. So können die Spannungsteiler 30, 31 bei niedriger Betriebsspannung des Motors oder bei ausreichenden Spannungsfestigkeit der Multiplexer 40, 47 zwischen den Ausgängen der Multiplexer 40 und 47 und den beiden Vergleichseingängen 291 und 292 angeordnet werden. Auf diese Weise können zwei Spannungsteiler eingespart werden.

Anstelle von spannungsvergleichenden Komparator können auch stromvergleichende Komparatoren eingesetzt werden und entsprechend statt Spannungsteiler strombewertende Widerstände verwendet werden.

In einer weiteren Variante kann die Drehrichtungsumkehr-Schaltvorrichtung 51 so ausgeführt werden, daß Umschalter ausschließlich in den Steuerleitungen zwischen dem Ringzähler 38 und den Multiplexern 40, 47 vorgesehen sind, wodurch in entsprechender Weise eine Drehrichtungsumkehr durchgeführt werden kann.

Grundsätzlich ist es auch möglich, auf die Multiplexer 40, 47 zu verzichten und alle auszuführenden Spannungsvergleiche in fest zugeordneten Komparatoren durchzuführen. An den Ausgängen der Komparatoren muß dann ein logisches Auswahlnetzwerk vorgesehen werden, dessen Signalwege von den Ausgängen des Ringzählers gesteuert werden. Eine solche Variante ist jedoch hinsichtlich der erforderlichen Bauteile sehr aufwendig.

**Patentansprüche**

1. Schaltungsanordnung zum Betreiben eines mehrphasigen Synchronmotors (10) an einem Gleichspannungsnetz mit einer der Phasenzahl der Ankerwicklung ($w_1$-$w_4$) des Synchronmotors entsprechenden Anzahl von Stromventilen (15-18), insbesondere Leitsungstransistoren, von denen jeweils eines in Reihe mit einer Phase der Ankerwicklung an der Netzgleichspannung angeschlossen ist, mit einem Ringzählen (38), der eine der eine der Phasenzahl der Ankerwicklung entsprechenden Zahl von parallelen Zählausgängen aufweist, die mit den Steuereingängen der Stromventile verbunden sind bei Erreichen des ihrer Wertigkeit entsprechenden Zählstandes im Ringzähler jeweils das zugeordnete Stromventil während eines elektrischen Winkelbereichs durchsteuern, der etwa gleich dem der Phasenzahl der Ankerwicklung entsprechenden Bruchteil von 360° elektrisch ist, und mit einer Ringzähler-Schaltvorrichtung (19), die aus dem Vergleich jeweils zweier an gesperrten Stromventilen abfallenden Spannungen Zählimpulse für den Ringzähler geneniert, **dadurch gekennzeichnet**, daß der Ringzähler-Schaltvorrichtung (19) mindestens ein von der Netzgleichspannung ($U_S$) abgeleiteter Vorgabewert ($k \cdot U_S$) zugeführt ist und daß die Ringzähler-Schaltvorrichtung (19) derart ausgebildet ist, daß nur dann ein aus dem Spannungsvergleich abgeleiteter Zählimpuls an den Ringzähler (38) gelangen kann, solange die im zeitlichen Verlauf abnehmende Spannung der zu vergleichenden Spannungen ($U_1$ - $U_4$) größer ist als der Vorgabewert ($k \cdot U_S$).

2. Schaltungsanordnung nach Anspruch 1, **dadurch gekennzeichnet**, daß der Vorgabewert gleich dem k-fachen der Netzgleichspannung ($U_S$) bemessen ist, wobei k größer als 1, vorzugsweise zwischen 1,05 und 1,1 gewählt ist.

3. Schaltungsanordnung nach Anspruch 1 oder 2, **dadurch gekennzeichnet**, daß die Ringzähler-Schaltvorrichtung (19) einen Zählimpuls-Hilfserzeuger (41, 36, 37) aufweist, der einen Zusatz-Zählimpuls generiert, wenn innerhalb einer vorgebenen Wartezeit kein Zählimpuls auftritt und mindestens eine der zu vergleichenden Spannungen ($U_1$ - $U_4$) unter einem Mindestwert liegt.

4. Schaltungsanordnung nach Anspruch 3, **dadurch gekennzeichnet**, daß der Mindestwert gleich dem Vorgabewert ($k \cdot U_S$) gewählt ist.

5. Schaltungsanordnung nach Anspruch 3 oder 4, **dadurch gekennzeichnet**, daß der Mindestwert oder ein zweiter Mindestwert gleich dem k-ten Teil der Netzspannung ($U_S$) bemessen ist und k größer als 1, vorzugsweise zwischen 1,05 und 1,1 gewählt ist.

6. Schaltungsanordnung nach einem der Ansprüche 1 - 5 für eine Synchronmotor mit einer eine geradzahlige Phasenzahl aufweisenden Ankerwicklung, **dadurch gekennzeichnet**, daß die Ringzähler-Schaltvorrichtung (19) eine Vergleichsvorrichtung (29) mit mindestens drei Vergleichseingängen (291-293) und ein über ein Torglied (35) an die Vergleichsvorrichtung (29) angeschlossenes flankengetriggertes Monoflop (37) aufweist, dessen instabiler Q-Ausgang mit dem Zähleingang des Ringzählers (38) verbunden ist, daß an dem ersten Vergleichseingang (291) der Vergleichsschaltung (29) jeweils das 1/s-fache der an demjenigen Stromventil (15-18) abfallenden Spannung ($U_1$ - $U_4$) liegt, das elektrisch um eine halbe elektrische Periode zu dem momentan leitenden Stromventil (15-18) versetzt ist, daß an dem zweiten Vergleichseingang (292) der Vergleichsvorrichtung (29) jeweils das 1/s-fache derjenigen Spannung liegt, die der an dem ersten Vergleichseingang (291) liegenden Spannung um eine der Phasenzahl der Ankerwicklung (12) entsprechenden Bruchteil der elektrischen Periode nacheilt, daß an dem dritten Vergleichseingang (293) eine Spannung liegt, die gleich dem k/s-fachen der Netzgleichspannung ($U_S$) bemessen ist, wobei k größer als 1, vorzugsweise zwischen 1,05 und 1,1 und s größer oder gleich k bemessen ist, und daß die Vergleichsvorrichtung (29) einen ersten Komparator (34), der die Spannung am ersten und zweiten Vergleichseingang (291, 292) vergleicht und ein Triggersignal für das Monoflop (37) ausgibt, solange die Spannung am zweiten Vergleichseingang (292) größer ist als die am ersten Vergleichseingang (291), und einem zweiten Komparator (39), der die Spannungen am ersten und dritten Vergleichseingang (291, 293) miteinander vergleicht und ein Toröffnungssignal an das Torglied (35) gibt, solange die Spannung am ersten Vergleichseingang (291) größer ist als die am dritten Vergleichseingang (293), aufweist.

7. Schalungsanordnung nach Anspruch 6, **dadurch gekennzeichnet**, daß der Zählimpuls-Hilfserzeuger der Ringzähler-Schaltvorrichtung (19) aus dem Monoflop (37) und aus einem mit dem Triggereingang des Monoflops (37) über ein zweites Torglied (42) verbundenen Triggersignal-Hilfserzeuger (41) besteht, der nach Ablauf der Warterzeit nach Auftreten des letzten Zählimpulses ein Triggersignal für das Monoflop erzeugt, und daß die Vergleichsvorrichtung (29) das zweite Torglied (42) steuert.

8. Schaltungsanordnung nach Anspruch 7, **dadurch gekennzeichnet**, daß der Triggersignal-Hilferserzeuger (41) einen von einem Zählimpuls-Generator (48) getakteten Zähler (49) mit einem Rücksetzeingang (R) und einem auf den Zähleingang rückgeführten Zählausgang ($Q_n$), an welchen bei Erreichen eines vorgegebenen Zählerstandes (n) ein Triggersignal auftritt, aufweist und daß der Rücksetzeingang (R) mit dem Q-Ausgang des Monoflops (37) und der Zählausgang ($Q_n$) mit dem Eingang des zweiten Torgliedes (42) verbunden ist.

9. Schaltungsanordnung nach Anspruch 7 oder 8, **dadurch gekennzeichnet**, daß der zweite Komparator (39) ein Torsperrsignal an das zweite Torglied (42) legt, solange die Spannung am ersten Vergleichseingang (291) größer ist als die am dritten Vergleichseingang (293) der Vergleichsvorrichtung (29).

10. Schaltungsanordnung nach einem der Ansprüche 7 - 9, **dadurch gekennzeichnet**, daß die Vergleichsvorrichtung (29) einen vierten Vergleichseingang (294), an dem eine Spannung liegt, die gleich dem 1/k·s-fachen der Netzgleichspannung ($U_S$) bemessen ist, und einen dritten Komparator (43) aufweist, der die Spannungen am ersten und vierten Vergleichseingang (291, 294) miteinander vergleicht und ein Sperrsignal an das zweite Torglied (42) legt, solange die Spannung am ersten Vergleichseingang (291) kleiner als die am vierten Vergleichseingang (294) ist.

11. Schaltungsanordnung nach einem der Ansprüche 7 - 10, **dadurch gekennzeichnet**, daß die Vergleichsvorrichtung (29) einen vierten Komparator (44) aufweist, der die Spannungen am zweiten und dritten Vergleichseingang (292, 293) miteinander vergleich und ein Torsperrsignal an das zweite Torglied (42) legt, solange die Spannung am zweiten Vergleichseingang (292) größer ist als die am dritten Vergleichseingang (293).

12. Schaltungsanordnung nach einem der Ansprüche 7 - 11, **dadurch gekennzeichnet**, daß die Vergleichsvorrichtung (29) einen fünften Komparator (45) aufweist, der die Spannungen am zweiten und vierten Vergleichseingang (292, 294) miteinander vergleicht und ein Torsperrsignal an das zweite Torglied (42) legt, solange die Spannung am zweiten Vergleichseingang (292) kleiner ist als die am vierten Vergleichseingang (294)).

13. Schaltungsanordnung nach einem der Ansprüche 6 - 12, **dadurch gekennzeichnet**, daß das Monoflop für die Dauer seines instabilen Zustandes ein Torsperrsignal an das erst Torglied (35) legt.

14. Schaltungsanordnung nach einem der Ansprüche 6 - 13, **dadurch gekennzeichnet**, daß die beiden Torglieder als AND-Gatter (35, 42) ausgebildet sind, daß von den drei Eingängen des das erste Torglied bildenden AND-Gatters (35) ein Eingang mit dem ersten Komparator (34), ein Eingang mit dem zweiten Komparator (39) und ein Eingang mit dem invertierenden Ausgang ($\bar{Q}$) des Monoflops (37) verbunden ist, daß von den beiden Eingängen des das zweite Torglied bildenden AND-Gatters (42) der eine mit dem Zählausgang ($Q_n$) des Zählers (49) und der andere mit dem Ausgang eines NOR-Gatters (46) verbunden ist, daß von den Komparatoren (34, 39, 43, 44, 45) der erste Komparator (34) mit seinem invertierenden Eingang an dem ersten Vergleichseingang (291) und mit seinem nicht invertierenden Eingang an dem zweiten Vergleichseingang (292), der zweite Komparator (39) mit seinem nicht invertierenden Eingang an dem ersten Vergleichseingang (291) und mit seinem invertierenden Eingang an dem dritten Vergleichseingang (293), der dritte Komparator (43) mit seinem invertierenden Eingang an dem ersten Vergleichseingang (291) und mit seinem nicht invertierenden Eingang an dem vierten Vergleichseingang (294), der vierte Komparator (44) mit seinem nicht invertierenden Eingang an dem zweiten Vergleichseingang (292) und mit seinem invertierenden Eingang an dem dritten Vergleichseingang (293) und der fünfte Komparator (45) mit seinem invertierenden Eingang an dem zweiten Vergleichseingang (292) und mit seinem nicht invertierenden Eingang an dem vierten Vergleichseingang (294) angeschlossen sind und daß die Ausgänge des zweiten, dritten, vierten und fünften Komparators (39, 42, 44, 45) mit jeweils einem von vier Eingängen des NOR-Gatters (46) verbunden sind.

15. Schaltungsanordnung nach einem der Ansprüche 6 - 14, **dadurch gekennzeichnet**, daß der erste und zweite Vergleichseingang (291, 292) der Vergleichsvorrichtung (29) mit jeweils einem Ausgang von zwei Multiplexern (40, 47) verbunden sind, daß den Stromventilen (15-18) Spannungsteiler (30-33) parallel geschaltet sind und die Eingänge der beiden Multiplexer (40, 47) mit jeweils einem Teilerabgriff der Spannungsteiler (30-33) verbunden sind, daß die Steuereingänge der Multiplexer (40, 47) mit den parallelen Zählausgängen des Ringzählers (38) verbunden sind und daß die beiden Multiplexer (40, 47) synchron derart gesteuert sind, daß die an den gleichen Spannungsteilern (30-33) angeschlossenen Eingänge der beiden Multiplexer (40, 47) in der Schaltfolge gegeneinander um einen Eingang verschoben sind.

16. Schaltungsanordnung nach einem Ansprüche 6 - 15, **gekennzeichnet durch** eine Schaltvorrichtung (51) zur Drehrichtungsumkehr des Synchronmotors.

17. Schaltungsanordnung nach Anspruch 15 und 16 für einen Synchronmotor mit einer vierphasigen Ankerwicklung, **dadurch gekennzeichnet**, daß die Schaltvorrichtung (51) vier Umschalter (511-514) aufweist, daß zwei Umschalter (511, 512) zwischen den Teilerabgriffen von zwei Spannungsteilern (31, 33) und den daran angeschlossenen Eingängen der beiden Multiplexer (40, 47) zum wechselweisen Vertauschen der angeschlossenen Eingänge angeordnet sind, daß zwei Umschalter (513, 514) zwischen zwei Zählausgängen (2, 4) des Ringzählers (38) und den daran angeschlossenen Steuereingängen (26, 28) der Stromventile (16, 18) angeordnet sind, daß alle Umschalter (511-514) synchron geschaltet sind und daß die mit den Umschaltern (511-514) verbundenen Spannungsteiler (31, 33) bzw. Stromventile (16, 18) gerad- oder ungeradzahligen Phasen der Ankerwicklung (12) zugehörig sind.

## Claims

1. Circuit for operating a multiphase synchronous motor (10) on a d.c. network with a number of current rectifiers (15-18), in particular power transistors, corresponding to the phase number of the armature winding ($w_1$-$w_4$) of the synchronous motor, of which power transistors one in each case is connected in series to a phase of the armature winding on the d.c. system voltage, having a ring counter (38) which has a number of parallel counting outputs corresponding to the number of phases of the armature winding, which counting outputs are connected to the control inputs of the current rectifiers and when the counting state, corresponding to their value, in the ring counter is reached, trip in each case the assigned current rectifier during an electrical angular region which is approximately the same as the fraction of 360° electric corresponding to the number of phases of the armature winding, and having a ring counter switching unit (19) which generates counting pulses for the ring counter from the comparison of in each case two voltages which decrease at disabled current rectifiers, characterised in that the ring counter switching unit (19) is fed at least one prescribed value ($k \cdot U_S$) derived from the d.c. system voltage ($U_S$) and in that the ring counter switching unit (19) is configured in such a way that a counting pulse which is derived from the voltage comparison can only pass to the ring counter (38) as long as the voltage, which decreases in the course of the variation against time, of the voltages ($U_1$-$U_4$) to be compared is greater than the prescribed value ($k \cdot U_S$).

2. Circuit according to Claim 1, characterised in that the prescribed value is dimensioned to be greater than the k-multiple of the d.c. system voltage ($U_S$), k being selected to be greater than 1, preferably between 1.05 and 1.1.

3. Circuit according to Claim 1 or 2, characterised in that the ring counter switching unit (19) has a counting pulse auxiliary generator (41, 36, 37) which generates an additional counting pulse if no counting pulse occurs within a prescribed waiting time and at least one of the voltages ($U_1$-$U_4$) to be compared lies below a minimum value.

4. Circuit according to Claim 3, characterised in that the minimum value is selected to be equal to the prescribed value ($k \cdot U_S$).

5. Circuit according to Claim 3 or 4, characterised in that the minimum value or a second minimum value is dimensioned to be equal to the k-th part of the system voltage ($U_S$) and k is selected to be greater than 1, preferably between 1.05 and 1.1.

6. Circuit according to one of Claims 1-5 for a synchronous motor with an armature winding having an even number of phases, characterised in that the ring counter switching unit (19) has a comparison device (29) having at least three comparison inputs (291-293) and an edge-triggered monoflop (37) connected via a gate element (35) to the comparison device (29), the unstable Q-output of which monoflop is connected to the counting input of the ring counter (38), in that in each case the 1/s multiple of the voltage ($U_1$-$U_4$) which decreases at that current rectifier (15-18) which is shifted electrically by half an electrical period with respect to the momentarily conductive current rectifier (15-18) is connected to the first comparison input (291) of the comparison circuit (29), in that in each case the 1/s multiple of that voltage which lags behind the voltage connected to the first comparison input (291) by a fraction of the electrical period which corresponds to the number of phase of the armature winding (12) is connected to the second comparison input (292) of the comparison device (29), in that a voltage which is dimensioned to be equal to the k/s multiple of the d.c. system voltage ($U_S$) is connected to the third comparison input (293), k being dimensioned to be greater than 1, preferably between 1.05 and 1.1 and s to be greater than or equal to k, and in that the comparison device (29) has a first comparator (34) which compares the voltage at the first and second comparison input (291, 292) and emits a trigger signal for the monoflop (37) as long as the voltage at the second comparison input (292) is greater than that at the first comparison input (291), and has a second comparator (39) which compares the voltages at the first and third comparison input (291, 293) with one another and transmits a gate opening signal to the gate element (35) as long as the voltage at the first comparison input (291) is greater than that at the third comparison input (293).

7. Circuit according to Claim 6, characterised in that the counting pulse auxiliary generator of the ring counter switching unit (19) consists of the monoflop (37) and a trigger signal auxiliary generator (41) which is connected to the trigger input of the monoflop (37) via a second gate element (42), which trigger signal auxiliary generator (41) generates a trigger signal for the monoflop after the expiry of the waiting time after the last counting pulse has occurred, and in that the comparison device (29) controls the second gate element (42).

8. Circuit according to Claim 7, characterised in that the trigger signal auxiliary generator (41) has a counter (49), which is clocked by a counting pulse generator (48), having a resetting input (R) and a counting output ($Q_n$) which is fed back to the counting input and at which a trigger signal occurs when a prescribed counting state (n) has been reached, and in that the resetting input (R) is connected to the Q-output of the monoflop (37) and the counting output ($Q_n$)

is connected to the input of the second gate element (42).

9. Circuit according to Claim 7 or 8, characterised in that the second comparator (39) applies a gate disable signal to the second gate element (42) as long as the voltage at the first comparison input (291) is greater than that at the third comparison input (293) of the comparison device (29).

10. Circuit according to one of Claims 7-9, characterised in that the comparison device (29) connects a fourth comparison input (294) at which a voltage is present which is dimensioned to be equal to the $1/k \cdot s$ multiple of the d.c. system voltage ($U_S$), and has a third comparator (43) which compares the voltages at the first and fourth comparison input (291, 294) with one another and applies a disable signal to the second gate element (42) as long as the voltage at the first comparison input (291) is smaller than that of the fourth comparison input (294).

11. Circuit according to one of Claims 7-10, characterised in that the comparison device (29) has a fourth comparator (44) which compares the voltages of the second and third comparison input (292, 293) with one another and applies a gate disable signal to the second gate element (42) as long as the voltage at the second comparison input (292) is greater than that at the third comparison input (293).

12. Circuit according to one of Claims 7-11, characterised in that the comparison device (29) has a fifth comparator (45) which compares the voltages at the second and fourth comparison input (292, 294) with one another and applies a gate disable signal to the second gate element (42) as long as the voltage at the second comparison input (292) is smaller than that at the fourth comparison input (294)).

13. Circuit according to one of Claims 6-12, characterised in that the monoflop applies a gate disable signal to the first gate element (35) for the duration of its unstable state.

14. Circuit according to one of Claims 6-13, characterised in that the two gate elements are configured as AND gate (35, 42), in that of the three inputs of the AND gate (35) forming the first gate element one input is connected to the first comparator (34), one input to the second comparator (39) and one input to the inverting output ($\overline{Q}$) of the monoflop (37), in that of the two inputs of the AND gate (42) forming the second gate element one is connected to the counting output ($Q_n$) of the counter (49) and the other to the output of an NOR gate (46), in that of the comparators (34, 39, 43, 44, 45) the first comparator (34) is connected by its inverting input to the first comparison input (291) and by its non-inverting input to the second comparison input (292), the second comparator (39) is connected by its non-inverting input to the first comparison input (291) and by its inverting input to the third comparison input (293), the third comparator (43) is connected by its inverting input to the first comparison input (291) and by its non-inverting input to the fourth comparison input (294), the fourth comparator (44) is connected by its non-inverting input to the second comparison input (292) and by its inverting input to the third comparison input (293) and the fifth comparator (45) is connected by its inverting input to the second comparison input (292) and by its non-inverting input to the fourth comparison input (294), and in that the outputs of the second, third, fourth and fifth comparator (39, 42, 44, 45) are connected in each case to one of four inputs of the NOR gate (46).

15. Circuit according to one of Claims 6-14, characterised in that the first and second comparison input (291, 292) of the comparison device (29) are connected to in each case an output of two multiplexers (40, 47), and that voltage dividers (30-33) are connected in parallel to the current rectifiers (15-18) and the inputs of the two multiplexers (40, 47) are connected in each case to a divider tap of the voltage dividers (30-33), in that the control inputs of the multiplexers (40, 47) are connected to the parallel counting outputs of the ring counter (38), and in that the two multiplexers (40, 47) are controlled synchronously in such a way that the inputs, connected to the same voltage dividers (30-33), of the two multiplexers (40, 47) are shifted with respect to one another in the switching sequence by one input.

16. Circuit according to one [sic] Claims 6-15, characterised by a switching unit (51) for reversing the direction of rotation of the synchronous motor.

17. Circuit according to Claim 15 and 16 for a synchronous motor having a four-phase armature winding, characterised in that the switching unit (51) has four change-over switches (511-514), in that two change-over switches (511, 512) are arranged between the divider taps of two voltage dividers (31, 33) and the inputs, connected thereto, of the two multiplexers (40, 47) for the alternate interchanging of the connected inputs, in that two change-over switches (513, 514) are arranged between two counting outputs (2, 4) of the ring counter (38) and the control inputs (26, 28), connected thereto, of the current rectifiers (16, 18), in that all the change-over switches (511-514) are connected synchronously, and in that the voltage dividers (31, 33) or current rectifiers (16, 18) connected to the change-over switches (511-514) are associated with odd-numbered or even-numbered phases of the armature winding (12).

## Revendications

1. Montage électrique pour faire fonctionner un moteur synchrone (10) à plusieurs phases sur un réseau à courant continu avec un nombre de redresseurs de courant (15-18) (transistors de puissance) correspondant au nombre de phases de l'enroulement ($w_1$-$w_4$) de l'induit du moteur synchrone, en particulier des transistors de puissance, dont chacun est monté en série avec une phase de l'enroulement d'induit branché sur un réseau à courant continu, avec un compteur annulaire (38), qui représente un nombre de sorties parallèles de comptage correspondant au nombre de phases de l'enroulement de l'induit, sorties qui sont reliées aux entrées de commande des redresseurs de courant et qui utilisent celui des redresseurs de courant associé au moment où est atteint dans le 13 compteur annulaire l'état de comptage qui correspond à sa valeur indicative pendant une zone angulaire électrique, qui est électriquement à peu près égale à la fraction de 360° correspondant au nombre de phases de l'enroulement de l'induit, et avec un dispositif de branchement (19) à compteur annulaire, qui génère des impulsions de comptage pour le compteur annulaire à partir de la comparaison de deux tensions appliquées aux redresseurs de courant bloqués, caractérisé en ce qu'au dispositif de branchement (19) à compteur annulaire est envoyé au moins une tension de valeur donnée ($k \cdot U_s$) délivrée par le réseau à courant continu de tension $U_s$ et en ce que le dispositif 19 à compteur annulaire est constitué de telle sorte qu'une impulsion de comptage délivrée à partir de la comparaison des tensions, ne peut arriver au compteur annulaire (38), que si la tension décroissante au cours du temps des tensions à comparer ($U_1$-$U_4$) est supérieure à la valeur donnée ($k \cdot U_s$).

2. Montage électrique selon la revendication 1, caractérisé en ce que la valeur donnée est égale à k fois la tension ($U_s$) du réseau à courant continu, k étant choisi plus grand que 1, et de préférence entre 1,05 et 1,1.

3. Montage électrique selon les revendications 1 ou 2, caractérisé en ce que le dispositif de branchement à compteur annulaire (19) présente un générateur auxiliaire d'impulsions de comptage (41, 36, 37) qui génère une impulsion de comptage additionnelle, si, à l'intérieur d'un temps d'attente prédéterminé, aucune impulsion de comptage ne survient et si au moins l'une des tensions à comparer ($U_1$-$U_4$) se trouve en dessous d'une valeur minimale.

4. Montage électrique selon la revendication 3, caractérisé en ce que la valeur minimale est choisie égale à la valeur donnée ($k \cdot U_s$).

5. Montage électrique selon la revendication 3 ou 4, caractérisé en ce que la valeur minimale ou une deuxième valeur minimale est choisie égale à k fois la tension $U_s$ du réseau à courant continu, k étant choisi plus grand que 1 et de préférence compris entre 1,05 et 1,1.

6. Montage électrique selon l'une des revendications 1 à 5 pour un moteur synchrone avec un enroulement d'induit présentant un nombre de phases pair, caractérisé à ce que le dispositif de branchement à compteur annulaire (19) présente un dispositif de comparaison (29) avec au moins trois entrées de comparaison (291-293) et un flip-flop (37) à déclenchement aux flancs associé par une porte (35) au dispositif de comparaison (29), flip-flop dont la sortie Q instable est reliée à l'entrée de comptage du compteur annulaire (38), en ce qu'à la première entrée de comparaison (291) du circuit de comparaison (29), se trouve une tension ($U_1$-$U_4$) appliquée à celui des redresseurs de courant, qui est électriquement décalé d'une demi période électrique par rapport au redresseur de courant (15-18) laissant passer le courant momentanément, en ce qu'a la deuxième entrée de comparaison (292) du dispositif de comparaison (29) il y a une tension égale 1/s fois celle des tensions qui suit la tension régnant à la première entrée de comparaison (291) d'une fraction de la période électrique correspondant au nombre de phases de l'enroulement de l'induit (12), en ce qu'à la troisième entrée de comparaison (293) il y a une tension, qui est égale à k/s fois la tension du réseau à courant continu ($U_s$), k étant supérieur à 1, de préférence compris entre 1,05 et 1,1 et s étant supérieur ou égal à k et en ce que le dispositif de comparaison (29) présente un premier comparateur (34), qui compare la tension à la première et à la seconde entrée de comparaison (291, 292) et délivre un signal de déclenchement pour le flip-flop (37), tant que la tension à la deuxième entrée de comparaison (292) est supérieure à la tension à la première entrée de comparaison (291) et un deuxième comparateur (39), qui compare les tensions à la première et à la troisième entrée de comparaison (291, 293) et fournit un signal d'ouverture de porte à la porte (35), tant que la tension à la première entrée de comparaison (291) est supérieure à celle à la troisième entrée de comparaison (293).

7. Montage électrique, selon la revendication 7, caractérisé en ce que le générateur auxiliaire d'impulsions de comptage du dispositif de branchement à compteur annulaire (19) consiste en le flip-flop (37) et en un générateur auxiliaire de signal de déclenchement (41) relié à l'entrée de déclenchement du flip-flop (37) par une deuxième porte (42), générateur qui après écoulement du temps d'attente après l'apparition de la dernière impulsion de comptage produit un signal de déclenchement pour le flip-flop et en ce que le dispositif de comparaison (29) commande la deuxième porte (42).

8. Montage électrique selon la revendication 7, caractérisé en ce que le générateur auxiliaire (41) du signal de déclenchement présente un compteur (49) recevant des impulsions d'un générateur d'impulsions de comptage (48) avec une entrée de remise à l'état initial (R) et une sorte de comptage ($Q_n$) bouclée sur l'entrée de comptage sortie à laquelle apparaît un signal de déclenchement lorsqu'est atteint un état prédéterminé (n) du compteur et en ce que l'entrée de remise à l'état initial (R) est reliée à la sorte $\overline{Q}$ du flip-flop (37) et la sortie de comptage ($Q_n$) est reliée à

l'entrée de la deuxième porte (42).

9. Montage électrique selon la revendication 7 ou 8, caractérisé en ce que la deuxième comparateur (39) fournit un signal de blocage de porte à la deuxième porte (42), tant que la tension à la première entrée de comparaison (291) est supérieure à celle qui règne à la troisième entrée de comparaison (293) du dispositif de comparaison (29).

10. Montage électrique selon l'une des revendications 7 à 9, caractérisé en ce que le dispositif de comparaison (29) présente une quatrième entrée de comparaison (294), à laquelle règne une tension, qui est égale à 1/k·s fois la tension $U_s$ du réseau à courant continu et un troisième comparateur (43) qui compare les tensions qui règnent à la première et à la quatrième entrée de comparaison (291, 294) et envoie un signal de blocage à la deuxième porte (42), tant que la tension à la première entrée de comparaison (291) est inférieure à celle qui règne à la quatrième entrée de comparaison (294).

11. Montage électrique selon l'une des revendications 7 à 10, caractérisé en ce que le dispositif de comparaison (29) présente un quatrième comparateur (44), qui compare les tensions à la deuxième et la troisième entrée de comparaison (292, 293) et envoie un signal de blocage à la deuxième porte (42), tant que la tension à la deuxième entrée de comparaison (292) est supérieure à celle qui règne à la troisième entrée de comparaison (293).

12. Montage électrique selon l'une des revendications 7 à 11, caractérisé en ce que le dispositif de comparaison (29) présente un cinquième comparateur (45) qui compare les tensions à la deuxième et à la quatrième entrée de comparaison (292, 294) et envoie un signal de blocage de porte à la deuxième porte (42) tant que la tension qui règne à la deuxième entrée de comparaison (292) est inférieure à celle qui règne à la quatrième entrée de comparaison (294).

13. Montage électrique selon l'une des revendications 6 à 12, caractérisé en ce que le flip-flop envoie pour la durée de son état instable un signal de blocage de porte à la première porte (35).

14. Montage électrique selon l'une des revendications 6 à 13, caractérisé en ce que les deux portes sont constituées sous la forme de porte ET' (35, 42), en ce que des trois entrées de la porte ET (35) constituant la première porte, une entrée est reliée au premier comparateur (34), une entrée est reliée au deuxième comparateur (39) et une entrée est reliée à la sortie d'interversion (Q) du flip-flop (37), en ce que des deux entrées de la porte ET (42) constituant la seconde porte, l'une est reliée à la sortie ($Q_n$) de comptage du compteur (49) et l'autre est reliée à la sortie d'une porte NOR (49) et l'autre est reliée à la sortie d'une porte NOR (46), en ce que des comparateurs (34, 39, 43, 44, 45) le premier comparateur (34) est relié par son entrée inversée à la première entrée de comparaison (291) et par son entrée non inversée est reliée à la deuxième entrée de comparaison (292), le deuxième comparateur (39) par son entrée non inversé est relié à la première entrée de comparaison (291) et par son entrée inversée à la troisième entrée de comparaison (293), le troisième comparateur (43) par son entrée inversée est relié à la première entrée de comparaison (291) et par son entrée non inversée à la quatrième entrée de comparaison (294), le quatrième comparateur (44) par son entrée inversée est relié à la deuxième entrée de comparaison (292) et par son entrée inversée à la troisième entrée de comparaison (293) et le cinquième comparateur (45) par son entrée inversée est relié à la deuxième entrée de comparaison (392) et par son entrée non inversée à la quatrième entrée de comparaison (294) et en ce que les sorties des deuxième, troisième, quatrième et cinquième comparateur (39, 42, 44, 45) sont chacune reliées à l'une des quatre entrées de la porte NOR (46).

15. Montage électrique selon l'une des revendications 6 à 14, caractérisé en ce que la première et la deuxième entrée de comparaison (291, 292) du dispositif de comparaison (29) sont reliées chacune à une sortie des deux multiplexeurs (40, 47) en ce que sur les redresseurs de courant (15-18) sont branchés en parallèle des diviseurs de tension (30-33) et les entrées des deux multiplexeurs (40, 47) sont chacune reliées avec une prise de diviseur de tension (30-33), en ce que les entrées de commande des multiplexeurs (40, 47) sont reliées aux sorties de comptage parallèles du compteur annulaire (38) et en ce que les deux multiplexeurs (40, 47) sont commandés de façon synchrone de telle façon que les entrées des deux multiplexeurs (40, 47) reliées aux mêmes diviseurs de tension (30-33) sont décalés d'une entrée les unes par rapport aux autres dans la succession des commutations.

16. Montage électrique selon l'une des revendications 6 à 15, caractérisé par un dispositif de branchement (51) pour le renversement du sens de rotation du moteur synchrone.

17. Montage électrique selon l'une des revendications 15 et 16, pour un moteur synchrone avec un enroulement d'induit à quatre phases, caractérisé en ce que le dispositif de branchement (51) présente quatre commutateurs (511-514), en ce que deux commutateurs (511, 512) sont disposés entre les prises de deux diviseurs de tension (31, 33) et les entrées associées à ces prises des deux multiplexeurs (40, 47) pour l'échange alterné des entrées associées, en ce que deux commutateurs (513, 514) sont disposés entre deux sorties de comptage (2, 4) du compteur annulaire (38) et les entrées de commande (26, 28) qui y sont associées des régulateurs de courant (16, 18), en ce que tous les commutateurs (511 à 514) sont branchés de manière synchrone et en ce que les diviseurs de tension (31, 33) ou les régulateurs de courant (16, 18) reliés aux commutateurs (511 à 514) appartiennent aux phases
paires ou impaires de l'enroulement (12) d'induit.

Fig. 1

Fig. 2

Fig. 3

EP 0 299 956 B1

16

Fig. 4

EP 0 299 956 B1